# EUROPÄISCHE PATENTANMELDUNG

(11) **EP 1 048 820 A2**
(43) Veröffentlichungstag der Anmeldung: **02.11.2000**
(21) Anmeldenummer: 00109052.1
(22) Anmeldetag: 28.04.2000
(51) Int. Cl.: E21B 44/00, E21B 7/06, E21B 23/00, E21B 47/06, F03G 7/04, F24J 3/08

(54) **Verfahren zur Erschliessung geothermischer Energie sowie Wärmetauscher hierfür**

(30) Priorität: 29.04.1999 DE 19919555
(71) Anmelder: FlowTex Technologie GmbH & Co. KG, 76275 Ettlingen (DE)
(72) Erfinder: Kleiser, Klaus, Dr.-Ing., 76297 Stutensee (Büchig) (DE)
(74) Vertreter: HOFFMANN - EITLE

(57) **Zusammenfassung**

Ein Verfahren zur Erschließung geothermischer Energie umfaßt die Schritte des Vorantreibens einer vollkommen verlaufsgesteuerten Bohrung (14,14a,18,19), das Erfassen der Temperatur im umgebenden Bereich sowie die Steuerung des Bohrverlaufs in Abhängigkeit von der Temperatur im Boden. Anschließend wird ein Wärmetauscherrohr in die Bohrung eingebracht.

## Beschreibung

### Gebiet der Erfindung

Die Erfindung betrifft ein Verfahren zur Erschließung geothermischer Energie sowie eine Vorrichtung für die Nutzung geothermischer Energie.

### Stand der Technik

Die Nutzung von Erdwärme zur Energiegewinnung ist seit langem bekannt. Unterschiedliche Formen der geothermischen Energiegewinnung, wie die Energiespeicherung und Nutzung von Gruben- oder Tunnelwässern, die oberflächennahe Geothermie für den Einsatz von Wärmepumpen zur Versorgung von kleinen, dezentralen Anlagen, aber auch die Hot-Dry-Rock-Technik sind jeweils bekannt.

Bei der Hot-Dry-Rock-Technik wird in einer Teufe von mehr als 2.500 m ein künstlicher, sehr ausgedehnter Spalt im Fels zwischen zwei Tiefbohrungen erzeugt. Das gezielte Erzeugen von Rissen wird durch Fracken erreicht, indem feste Körper, z.B. Glasperlen oder Fracsand, mit hohem Druck in die Bohrung eingebracht werden und gezielt zu Rissen in dem umgebenden Gestein führen. Der Wärmeabbau erfolgt dann über Wasserzirkulation durch diesen Spalt. Hierfür wird kaltes Wasser in einer Injektionsbohrung verpreßt, strömt durch den künstlich erzeugten Spalt, heizt sich dort auf und erreicht als überhitztes Wasser über eine Produktionsbohrung wieder die Oberfläche. Nach neueren Erkenntnissen weist das Grundgebirge bis in große Tiefen Risse und Spalten auf, die oftmals auch Wasser führen. Daher nutzen neuere Konzepte die natürliche Klüftung und Durchlässigkeit des Grundgebirges. Ausgehend von einer Tiefbohrung werden die wasserführenden Risse und Spalten im Grundgebirge gezielt hydraulisch aufgeweitet und ihre Durchlässigkeit erhöht. Wird nun in einigen hundert Metern Entfernung von der Injektionsbohrung in einer Förder- oder Produktionsbohrung die Wassersäule abgesenkt, während gleichzeitig in der Injektionsbohrung weiter Wasser verpreßt wird, so entsteht im zerklüfteten Untergrund ein großräumiges Druckgefälle von der Injektionsbohrung zur Produktionsbohrung. Das Wasser zirkuliert nicht mehr in Einzelspalten, sondern strömt durch ein weiträumiges, vernetztes System von aufgeweiteten Klüften und zusätzlich künstlich erzeugten Rissen.

Bei der Migration durch das Netzwerk von Rissen und Klüften nimmt das Wasser oder der Dampf Mineralien auf, so daß ein mit einem hohen Mineralienanteil beladener Naßdampf aus der Produktbohrung abgezogen wird. Dies bringt Einschränkungen bei der oberirdischen Wärmeverwertung mit sich, indem die Rohrleitungen und insbesondere Wärmetauscherrohre mit geringer Querschnittsfläche häufig ausgetauscht werden müssen, da sich an den Wandungen der Rohrleitungen und Wärmetauscher sehr schnell unerwünschte Mineralienschichten aufbauen, welche die Querschnitte verengen, den Wärmetausch verschlechtern, den Druckverlust bei der Durchströmung der Rohrleitungen erhöhen und schließlich die Strömungsquerschnitte vollständig blockieren können. Diese Verockerung der Leitungen tritt innerhalb sehr kurzer Zeiträume auf. Insbesondere der Bereich des entwärmten Wassers ist hier eine besondere Problemzone, weil die Löslichkeit für die Mineralien mit sinkenden Drücken und Temperaturen abnehmen und die Mineralien ausgefällt werden.

Darüber hinaus ist das Hot-Dry-Rock-Verfahren bezüglich der einzusetzenden Bohrtechnik sehr teuer und daher nur für große Kraftwerke geeignet. Mit wachsender Bohrlänge nehmen die Kosten für das Niederbringen einer Bohrung überproportional zu, so daß die hohen Investitionskosten für mindestens zwei Bohrungen (Bohrung zum Verpressen des Wassers sowie mindestens eine Produktleitung) die Nutzung von Erdwärme mit dem Hot-Dry-Rock-Verfahren in vielen Fällen wirtschaftlich unrentabel gestalten.

Die deutsche Offenlegungsschrift 36 27 680 beschreibt einen geschlossenen Kreislauf für Wasser und Dampf, bei dem durch Erdwärme erzeugter Dampf der Energiegewinnung zugeführt und später wieder kondensiert wird, um mittels einer Pumpe auf den erforderlichen Einpreßdruck gebracht zu werden. Im Erdinneren befindet sich innerhalb des geschlossenen Leitungssystems ein Aufheizbehälter, der durch Wärmeleitung mit dem Erdinneren in Verbindung steht und zum Zwecke der besseren Wärmeübertragung von einer bei sehr hoher Temperatur siedenden Flüssigkeit, insbesondere Öl, umgeben ist. Die Siedetemperatur dieser Flüssigkeit wird von der Erdwärme nicht erreicht, so daß die Flüssigkeit in der Tiefe des Bohrlochs verbleibt und den Wärmeübergang zwischen den heißen Bodenschichten zum Aufheizbehälter hin verbessert. Durch die geschlossene Kreislaufführung des zu erwärmenden Wassers in dem einzelnen Sackbohrloch tritt keine Kontamination des Wassers auf.

Die deutsche Offenlegungsschrift 24 01 667 beschreibt eine Einrichtung zur Nutzung der Erdwärme unter Verwendung eines Förderrohres mit verschiedenen Kammern. Da der Wärmeisolierung des Förderrohres größte Bedeutung zukommt, wird das Evakuieren des Zwischenraumes zwischen den Rohren vorgeschlagen. Um auch die Strahlung möglichst gering zu halten, wird weiterhin vorgeschlagen, die aufeinander zu gerichteten Rohroberflächen mit einer dünnen Schicht Silber zu überziehen.

Auch die deutsche Offenlegungsschrift 24 10 583 zeigt ein Doppelmantelrohr, bei dem der Zwischenraum zwischen dem Innenrohr und dem Außenrohr evakuiert wird.

Bei den im Stand der Technik bekannten Lösungen unter Verwendung eines geschlossenen Wasserkreislaufs in der Bohrung wird jeweils nur eine linear verlaufende Sackbohrung eingesetzt. Diese besitzt den Nachteil, daß Maßnahmen erforderlich sind, um die Verweildauer des Wärmeübertragungsmediums in dem thermisch nutzbaren Bereich möglichst hoch zu halten. Eine geringe Strömungsgeschwindigkeit in dem geschlossenen Schlaufensystem besitzt allerdings den Nachteil, daß auch die Wärmeverluste während des Abtransports des erwärmten Wassers oder Wasserdampfes hoch sind. Um diese Schwierigkeiten zu überwinden, richtete sich das Augenmerk bisheriger Entwicklungen im Stand der Technik vor allen Dingen auf die Verbesserung der Isolation im Bereich des Abtransports des erwärmten Wassers oder Wasserdampfes oder aber es wurden Anstrengungen unternommen, um spezielle Wärmetauschergeometrien in dem thermisch nutzbaren Bodenbereich anzuordnen, wie dies beispielsweise durch den in der deutschen Offenlegungsschrift 36 27 680 eingebrachten Aufheizbehälter verwirklicht wurde.

Die geothermisch nutzbaren Bereiche finden sich vor allen Dingen in Transpressions- oder Tensionszonen, die entweder Karsthohlräume, beispielsweise mit Wasser gefüllte Karstkluftkörper, oder aber tektonische Durchlässigkeiten aufweisen. Eine weitere Alternative liegt darin, daß das Bodenmaterial in diesen Bereichen eine besonders hohe natürliche Porosität besitzt, so daß eine Umströmung des Wärmeträgers ermöglicht wird.

### Darstellung der Erfindung

Der Erfindung liegt die Aufgabe (das Problem) zugrunde, ein Verfahren zur Erschließung geothermischer Energie sowie eine Vorrichtung für die Nutzung geothermischer Energie vorzuschlagen, die mit einem geringeren Investitionsaufwand eine verbesserte Wärmegewinnung ermöglichen.

Diese Aufgabe wird durch ein Verfahren zur Erschließung geothermischer Energie mit den Merkmalen des Anspruchs 1 gelöst. Die Vorrichtung für die Nutzung geothermischer Energie ist durch die Merkmale des Anspruchs 11 gekennzeichnet.

Der Erfindung liegt der Gedanke zugrunde, daß eine Bohrung eingebracht wird, die gezielt der nutzbaren Temperatur im Boden folgt. Dies ist möglich, indem eine vollkommen verlaufsgesteuerte Bohrung mit einem fernsteuerbaren Bohrkopf vorangetrieben wird und der Bohrverlauf in Abhängigkeit von der erfaßten Temperatur im umgebenden Bodenbereich gesteuert wird. Es ist somit unter Verwendung dieses Verfahrens möglich, eine Bohrung bis in einen geothermisch nutzbaren Bereich voranzutreiben und anschließend in einer dreidimensionalen beliebigen Richtungsorientierung einer geothermisch nutzbaren Zone zu folgen. Hierdurch wird es möglich, eine größere Bohrungslänge in einem geothermisch nutzbaren Bereich zu verlegen, wodurch auch bei einer hohen Durchströmungsgeschwindigkeit des Wärmeübertragungsmediums eine ausreichende Temperaturerhöhung erzielt werden kann. Die Strömungsgeschwindigkeit kann so angepaßt werden, daß die Verweildauer des erwärmten Wärmeübertragungsmediums im Produktrohr so optimiert wird, daß die Wärmeverluste besonders gering gehalten werden können.

Die Vorrichtung zur Nutzung geothermischer Energie umfaßt einen Wärmetauscherbereich, der dem Temperaturverlauf im Wärmeherd folgt. Der Bohrkopf beim Erstellen des Wärmetauscherbereichs wird so gesteuert, daß er in Richtung der höchsten Temperatur fährt, um einen möglichst wirkungsvollen Abbau der vorhandenen geothermischen Energie zu ermöglichen.

Bevorzugte Ausführungsformen sind durch die übrigen Ansprüche gekennzeichnet.

Nach einer bevorzugten Ausführungsform umfaßt das Verfahren weiterhin den Schritt des Injizierens eines Wärmeübertragungsmediums in einen Bodenbereich, welcher das Wärmetauscherrohr umgibt. Diese zusätzliche Verfahrensmaßnahme dient dazu, die Wärmeübertragung zwischen dem Bodenbereich und dem Wärmeübertragungsrohr zu verbessern, indem ein isolierender Luftspalt zwischen der Wandung der Bohrung und dem eingebrachten Wärmeübertragungsrohr oder aber nur ein teilweises Anliegen des umgebenden Gesteins an dem Wärmetauscherrohr vermieden wird. Als Wärmeübertragungsmedium könnte beispielsweise ein schwersiedendes Öl zum Einsatz gelangen, das auch bei Temperaturen über dem Siedepunkt des Wassers in flüssigem Zustand verbleibt und daher eine gute Wärmeübertragung vom umgebenden Bodenbereich zum Wärmetauscherrohr gewährleistet.

Nach einer bevorzugten Ausführungsform werden Abzweigbohrungen im geothermisch nutzbaren Bereich erstellt. Hierdurch wird es unter Verwendung geeigneter Übergangsstücke möglich, eine möglichst große Rohrlänge des Wärmetauscherrohrs innerhalb des geothermisch nutzbaren Bereichs zu plazieren.

Die Teufe der Bohrung ist ausschließlich nutzungsorientiert. Die Teufe der hier vorgeschlagenen Anwendungen ist bedeutend geringer als bei dem bekannten Hot-Dry-Rock-Verfahren und liegt beispielsweise im Bereich zwischen 1000 m und 1500 m. Die geringere Teufe der Bohrung bietet, wie eingangs erwähnt wurde, den Vorteil bedeutend geringerer Investitionskosten beim Erstellen einer geothermischen Anlage. Die geringe Teufe der Bohrung ist aber vor allen Dingen deswegen wirtschaftlich sinnvoll, weil unter Verwendung des erfindungsgemäßen Verfahrens in oberflächennäheren, warmen Schichten mit Hilfe der vollkommen verlaufsgesteuerten Bohrtechnik einem Isothermenverlauf im Boden gefolgt werden kann.

Vorzugsweise wird das Wärmetauscherrohr in einem Abrollbohrgestänge (coiled tubing) in die Bohrung eingebracht. Dies bietet die Möglichkeit, auf eine sehr einfache und somit kostengünstige Weise das Wärmetauscherrohr in der Bohrung anzuordnen.

Alternativ kann die Bohrung als Sackbohrung oder aber auch als Schlaufenbohrung mit gleichem oder unterschiedlichem Start- und Zielpunkt ausgeführt werden. Bei der Verwendung einer Sackbohrung wird die gesamte Bohrlänge minimiert, da die Wegstrecke von der Erdoberfläche bis zur geothermisch nutzbaren Tiefe nur einmal zurückgelegt werden muß.

Eine Schlaufenbohrung kann sich jedoch als eine ebenso geeignete Alternative erweisen und erleichtert insbesondere das Einziehen des Wärmetauscherrohres, da dieses lediglich beim Zurückziehen des Bohrgestänges vom Zielpunkt zurück zum Startpunkt der Schlaufenbohrung in die Bohrung eingezogen werden kann.

Die Vorrichtung für die Nutzung geothermischer Energie in Sackbohrungen ist nach einer bevorzugten Ausführungsform aus drei Teilbereichen aufgebaut: einer konzentrischen Anordnung einer ersten, ringförmigen Kammer im Wärmetauscherrohr für die Zuleitung von kaltem Wärmeübertragungsmedium und einer zweiten, kreisförmigen Kammer im Wärmetauscherrohr für die Abfuhr von erwärmtem Wärmeübertragungsmedium sowie einen zweiten Bereich über dem sonstigen Verlauf der Bohrung, in dem die erste Kammer und die zweite Kammer durch eine wärmeisolierende Trennwand abgeteilt sind, Zwischen dem ersten Bereich und zweiten Bereich ist ein Übergangsstück vorgesehen, um die jeweiligen Strömungskammern dicht miteinander in Verbindung zu bringen, so daß eine geschlossene Kreislaufführung vom Wärmeübertragungsmedium erzielt werden kann. Der erste Bereich mit der konzentrischen Anordnung der ersten Kammer um die zweite Kammer stellt eine ausreichende Oberfläche im außenliegenden Ringraum zur Erwärmung des Wärmeübertragungsmediums bereit, während im zweiten Bereich die Kontaktfläche zwischen den beiden Kammern möglichst gering gehalten wird, damit zwischen den beiden Kammern nur geringe Verlustwärmeströme auftreten.

Alternativ umfaßt die Vorrichtung für die Nutzung geothermischer Energie in Schlaufenbohrungen ein Zuführrohr, das in den Wärmeherd hineinreicht sowie ein getrennt hiervon vorgesehenes, isoliertes Vorlaufrohr, mit dem das erwärmte Wärmeübertragungsmedium zu der Erdoberfläche geführt wird. Zwischen dem Zuführrohr und dem isolierten Vorlaufrohr verläuft eine unverrohrte Bohrung im Wärmeherd, die dem Temperaturverlauf im Wärmeherd folgt. Das Vorsehen einer unverrohrten, offenen Strecke im Wärmeherd bildet eine freie Reaktionszone, in der ein sehr guter Wärmetausch zwischen dem Wärmeübertragungsmedium und dem umgebenden Gestein auftritt. Im Vergleich zu einer vollständigen Verlegung von Wärmetauscherrohren durch die Schlaufenbohrung hindurch besitzt diese Ausführungsform den Vorteil, daß im Bereich der offenen Strecke im Wärmeherd ein sehr guter Wärmetausch zwischen dem Wärmeübertragungsmedium und dem umgebenden Gestein ohne Zwischenschaltung von Rohrelementen stattfinden kann. Da das Wärmeübertragungsmedium durch eine definierte Bohrung und nicht durch kleine Risse und Poren im Gestein strömt, stellt sich das Problem einer übermäßigen Aufnahme gelöster Salze, die im Vorlaufrohr zu einer Verockerung führen können, nicht.

Der erfindungsgemäße Wärmetauscher weist vorzugsweise ein Zwischenstück zwischen dem ersten Bereich und dem zweiten Bereich auf, das dicht die jeweiligen ersten Kammern und zweiten Kammern im ersten Bereich und zweiten Bereich miteinander verbindet. Ein derartiges Zwischenstück innerhalb des in die Bohrung einzubringenden Wärmetauscherrohres paßt die Lage der beiden Kammern zueinander in bestmöglicher Weise an die gewünschten Wärmeübertragungserfordernisse an. Wie oben bereits erläutert wurde, kann in dem Bereich, in dem eine Isolierung zwischen den beiden Kammern vorrangig verwirklicht werden soll, eine möglichst geringe Grenzfläche zwischen den beiden Kammern vorgesehen werden, während in dem Bereich, in dem eine Wärmegewinnung im Boden stattfindet, eine möglichst große Wärmeübertragungsfläche der Kammer mit dem zu erwärmenden Wärmeträgerfluid vorgesehen wird.

Nach einer bevorzugten Ausführungsform kann das Wärmetauscherrohr für die Nutzung geothermischer Energie ein Bündel von Rohren umfassen, die jeweils vom Wärmeübertragungsmedium durchströmbar sind. Diese Maßnahme erhöht die linear mit der aufgenommenen Wärmemenge korrelierte Wärmeaustauschfläche.

Nach einer bevorzugten Ausführungsform weist das Wärmetauscherrohr mindestens eine Injektionsleitung innerhalb des Wärmetauscherrohres auf, die eine oder mehrere Öffnungen nach außen aufweist, um einen Stoff in den das Wärmetauscherrohr umgebenden Gesteinsbereich abzugeben. Wie oben im Zusammenhang mit dem erfindungsgemäßen Verfahren bereits erläutert wurde, kann das Einbringen eines hochsiedenden Wärmeübertragungsmediums in den das Wärmetauscherrohr umgebenden Gesteinsbereich den Wärmeübergang verbessern. Allerdings verbleibt das Wärmeübertragungsmedium nicht über längere Zeiträume stabil in dem umgebenden Gesteinabereich, sondern diffundiert in den umgebenden Gesteinsbereich ab. Daher sind Injektionsleitungen besonders vorteilhaft, um bei Bedarf weiteres Wärmeübertragungsmedium injizieren zu können.

Zur Durchführung des Verfahrens kommt eine Erdwärmesonde zum Einsatz, die eine Einrichtung zur kontinuierlichen Erfassung von Temperaturverläufen in bestimmten Abschnitten oder im gesamten Verlauf der Erdwärmesonde umfaßt. Diese Einrichtung umfaßt ein Glasfasermeßkabel mit Schutzumhüllung, die der Informationsverbindung zwischen dem Temperatursensor und dem Bohrleitstand dient.

Vorzugsweise kann zusätzlich eine Einrichtung zur Wartung, zum Freispülen und ggf. zur Erzwingung von Konvektion an und um die Erdwärmesonde vorgesehen sein, die in Form eines vollständig oder abschnittsweise perforierten Rohres ausgebildet ist, aus der geeignete Betriebsstoffe in den Bereich um die Erdwärmesonde injiziert werden können.

### Kurze Beschreibung der Zeichnungen

Nachfolgend wird die Erfindung rein beispielhaft anhand der beigefügten Figuren beschrieben, in denen:
- Fig. 1: eine schematische Ansicht einer vollkommen verlaufsgesteuerten Sackbohrung mit einer Verzweigungsbohrung darstellt;
- Fig. 2: ein schematisches Beispiel einer vollkommen verlaufsgesteuerten Schlaufenbohrung darstellt;
- Fig. 3: ein Ausführungsbeispiel eines Wärmetauscherrohres zur Verwendung in einer Schlaufenbohrung gemäß Fig. 2 zeigt;
- Fig. 4: ein Beispiel für ein verwendetes Wärmetauscherrohr zur Dampferzeugung in einer Schlaufenbohrung gemäß Fig. 2 zeigt;
- Fig. 5: die Verwendung eines Rohrbündelwärmetauscherrohres in einer Sackbohrung zeigt;
- Fig. 6: ein Wärmetauscherrohr zur Erzeugung von Dampf in einer Sackbohrung zeigt;
- Fig. 7: ein Wärmetauscherrohr mit einer unterschiedlichen Geometrie im thermisch nutzbaren Bereich sowie im Zu- und Abtransportbereich zeigt;
- Fig. 8: eine schematische Querschnittsansicht des in Fig. 7 gezeigten Wärmetauscherrohrs im Zu- und Abtransporthereich zeigt;
- Fig. 9: eine schematische Querschnittsansicht des in Fig. 7 gezeigten Wärmetauscherrohrs im thermisch nutzbaren Bereich zeigt;
- Fig. 10: eine Querschnittsansicht eines Wärmetauscherrohrs entsprechend Fig. 8 in einer alternativen Ausführungsform zeigt; und
- Fig. 11: eine Querschnittsansicht eines Wärmetauscherrohrs entsprechend Fig. 8 mit zusätzlichen Injektionsleitungen darstellt.

### Wege zur Ausführung der Erfindung

Die nachfolgenden Figuren sind jeweils schematische Ansichten, die das Verfahren zur Erschließung geothermischer Energie sowie die hierbei einsetzbaren Wärmetauscher zur Gewinnung geothermischer Energie darstellen. In den nachfolgenden Figuren werden jeweils gleiche Bauelemente mit gleichen Referenzziffern bezeichnet.

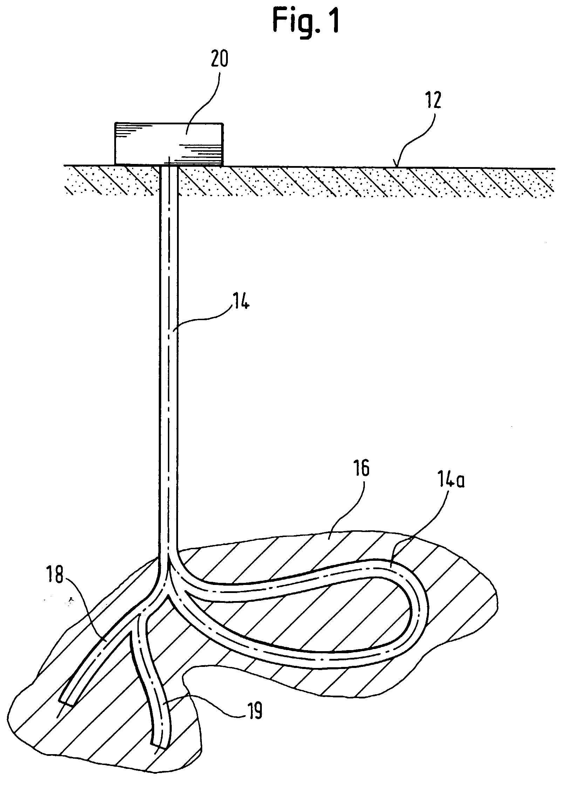

In Fig. 1 ist schematisch das Verfahren zur Erschließung geothermischer Energie unter Verwendung einer Sackbohrung dargestellt. Zur besseren Verdeutlichung ist in Fig. 1 wie auch in den nachfolgenden Figuren der Durchmesser der Tiefenbohrung stark vergrößert dargestellt. Von der Erdoberfläche 12 verläuft eine vollkommen verlaufsgesteuerte Bohrung 14 in einen geothermisch nutzbaren Bereich 16, der schematisch als ein schraffierter Bereich in den Fig. 1, 2 und 7 dargestellt ist. Bis zu diesem Bereich verläuft im Ausführungsbeispiel gemäß Fig. 1 die Bohrung 14 senkrecht von der Erdoberfläche 12 in die Tiefe. Dies ist im Regelfall vorteilhaft, da die gesamte zu erstellende Bohrlänge für die Nutzung der geothermischen Energie möglichst gering gehalten werden soll und insbesondere der Transportweg des erzeugten heißen Wärmeübertragungsmediums, z.B. Wasser oder des Dampfes aufgrund der Wärmeverluste über der Wegstrecke möglichst gering gehalten werden soll. Selbstverständlich können aber auch je nach den örtlichen Gegebenheiten und der geologischen Struktur die Bohrung 14 von der Erdoberfläche 12 bis in den geothermisch nutzbaren Bereich 16 bereits einen beliebigen Verlauf nehmen, beispielsweise um besonders harte Felsschichten umgehen zu können.

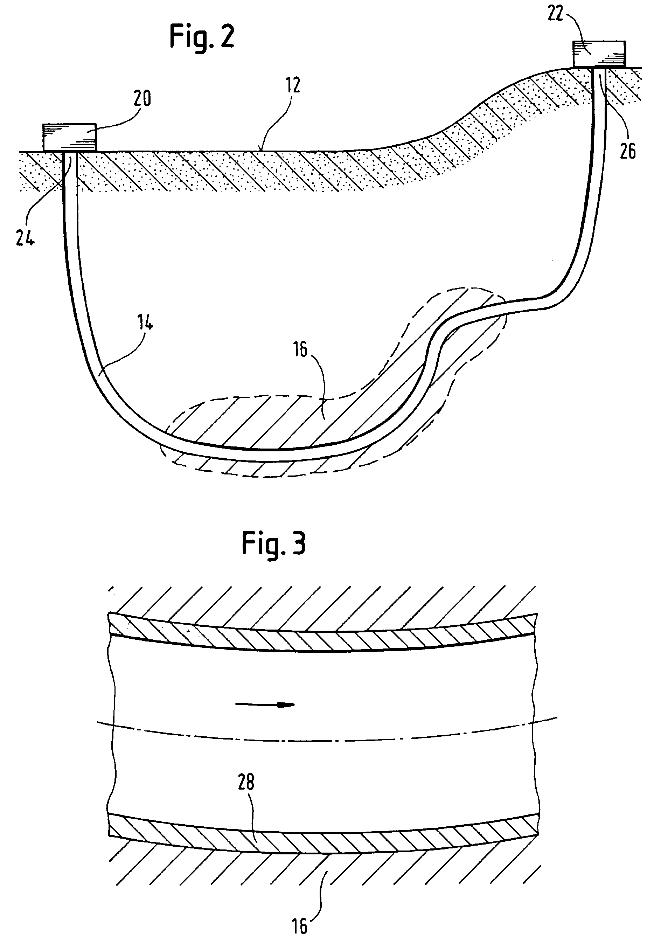

Die Bohrung 14 wird mit Hilfe einer vollkommen verlaufsgesteuerten Bohrtechnik, z.B. mit Hilfe des bekannten Horizontalspülbohrverfahrens, durchgeführt. Hierbei wird ein Bohrkopf eingesetzt, der mindestens eine geneigte Steuerfläche aufweist, mit Hilfe derer beliebige Richtungskorrekturen des Bohrkopfes durchgeführt werden können. Eine Bohrflüssigkeit tritt unter hohem Druck aus dem Bohrkopf aus und wirkt als Schneidstrahl, d.h. das unmittelbar vor dem Boden liegende Material wird gelöst, um den Vortrieb des Bohrkopfes zu ermöglichen. Üblicherweise wirkt bei der vollkommen verlaufsgesteuerten Bohrtechnik der Bohrkopf über eine Sendereinrichtung mit einem Ortungsgerät zusammen. Bei Tiefen über 10 m wird eine magnetische Ortung mit Drahtübertragung zu einem Leitstand an der Bohranlage vorgenommen, es sind jedoch lediglich Neigungs- und Richtungsverfolgungen durchführbar. Allerdings ist bei der später anhand der Fig. 2 erläuterten Schlaufenbohrung mit unterschiedlicher Start- und Zielöffnung eine Sendeeinrichtung im Bohrkopf vorteilhaft, weil nahe der gewünschten Zielöffnung eine etwaige Abweichung des Bohrverlaufes noch gezielt korrigiert werden und daher die Zielöffnung sehr genau im voraus festgelegt werden kann.

Vorzugsweise ist der Bohrkopf mit einem Temperatursensor versehen, der dem Bedienpersonal während des Bohrverlaufes Auskunft über die Temperatur am Bohrkopf übermittelt. Dies gestattet es, geothermisch nutzbare Bereiche aufzufinden und gezielt diesen zu folgen, wie in Fig. 1 durch die Bohrung 14a angedeutet ist. Hierdurch wird es möglich, auch lokal begrenzte, geothermisch nutzbare Bereiche in bestmöglicher Weise zu nutzen. Die verlaufsgesteuerte Bohrtechnik kann auch dazu genutzt werden, sich geologische Unregelmäßigkeiten zunutze zu machen, um die Bohrung möglichst schnell und somit mit möglichst geringem Investitionsaufwand voranzutreiben. So kann beispielsweise unabhängig von dem gemessenen Isothermenverlauf innerhalb geothermisch nutzbarer Gebiete Rissen und Spalten gefolgt werden, um einen möglichst schnellen Vortrieb zu erzielen.

Eine weitere, optionale Verfahrensvariante ist in der Fig. 1 dargestellt. Wie ersichtlich ist, wurde eine primäre Abzweigungsbohrung 18 erstellt, die innerhalb des geothermisch nutzbaren Bereichs 16 von der Bohrung 14 bzw. 14a abzweigt. Dies ist leicht dadurch möglich, daß der Bohrkopf mit dem Bohrgestänge bis zum gewünschten Abzweigpunkt wieder zurückgezogen wird, um anschließend in einer neuen Richtung eine Abzweigbohrung 18 im geothermisch nutzbaren Bereich zu erstellen. Selbstverständlich setzt ein derartiger, komplexer Bohrverlauf im geothermisch nutzbaren Bereich auch die spezielle Anpassung des Verlaufs des geschlossenen Kreislaufs des zu erwärmenden Wärmeübertragungsmediums voraus. Es müssen bei dem Erstellen von verzweigten Bohrungen spezielle automatisierte Einrichtungen eingesetzt werden, die in der gewünschten Tiefe ein thermisches, elektrisches oder chemisches Verschweißen der Rohrenden miteinander ermöglichen, so daß das zu erwärmende Wärmeübertragungsmedium beispielsweise zunächst eine geschlossene Schlaufe in der Bohrung 18 durchfährt, anschließend eine vergleichbare Schlaufe in der Bohrung 14a durchfährt und zuletzt wieder durch die Bohrung 14 zur Erdoberfläche gelangt. Um einen geothermisch nutzbaren Bereich möglichst wirkungsvoll zu nutzen, können von den primären Abzweigungsbohrungen sekundäre Abzweigungsbohrungen 19 abzweigen, wobei sowohl die primären Abzweigungsbohrungen wie auch die sekundären Abzweigungsbohrungen sowohl als Sackbohrungen als auch als Schlaufenbohrungen ausgebildet sein können.

Wie oben bereits dargelegt wurde, wird das Wärmeübertragungsmedium innerhalb der Bohrung in einen geschlossenen Kreislauf geführt, so daß die nachteiligen Wirkungen eines Lösens von Mineralien aus dem Boden mit den geschilderten Nachteilen einer Verockerung von Leitungen unterbleibt. Es findet somit nur ein indirekter Wärmetausch zwischen dem geothermisch nutzbaren Bodenbereich 16 und dem Wärmeübertragungsmedium in einem geschlossenen Leitungssystem statt. Wie später eingehender erläutert werden wird, wird abgekühltes Wärmeübertragungsmedium in die Bohrung gepumpt und entweder erwärmtes Wärmeübertragungsmedium in flüssiger Form oder aber auch in dampfförmiger Form abgezogen. Das im geschlossenen Kreislauf geführte Wärmeübertragungsmedium wird in einer geeigneten Anlage 20 zur Energiegewinnung in Form elektrischer Energie oder aber auch nach einem Wärmetausch zur Speisung von Fernwärmenetzen eingesetzt.

Die Vorrichtung zur Nutzung der geförderten Erdwärme kann der Vorwärmung eines kontinuierlichen thermodynamischen Prozesses dienen und einen in sich geschlossenen Druckwasserkreislauf mit Umwälzpumpe, Bypassfilter, Druckausgleichsbehälter und Wärmetauscher umfassen.

Fig. 2 zeigt eine alternative Variante unter Verwendung einer Schlaufenbohrung, die hier einen unterschiedlichen Start- und Zielpunkt auf der Erdoberfläche 12 besitzt. Die Bohrung 14 wird ebenfalls mit Hilfe der vollkommen verlaufsgesteuerten Bohrtechnik durchgeführt und folgt, wie in Fig. 2 schematisch angedeutet ist, dem Verlauf des geothermisch nutzbaren Bereichs 16.

Bezüglich der Strömungsführung des Wärmeübertragungsmediums innerhalb der Bohrung 14 sind verschiedene Alternativen denkbar. So kann bei dem in Fig. 2 schematisch dargestellten Beispiel nach dem Erreichen der Zielöffnung eine einzuziehende Leitung direkt am Bohrgestänge oder aber einem dazwischen geschalteten, kegelförmigen Aufweitkopf befestigt werden und sozusagen im Rückwärtsgang in die Bohrung 14 eingezogen werden, bis das zu verlegende Wärmetauscherrohr an der Startöffnung anlangt. Im einfachsten Fall handelt es sich bei dem Wärmetauscherrohr um eine einfache Rohrleitung, die entsprechend den während der Bohrung gewonnenen Temperaturdaten bereichsweise isoliert ist und, im Bereich der Durchfahrung des thermisch nutzbaren Bereichs 16, keine Isolierung aufweist. In diesem möglichen Beispiel würde somit Speisewasser an der Einströmstelle 24 in die in die Bohrung 14 eingezogene Rohrleitung eingespeist werden und in einer isolierten Rohrleitung bis zum geothermisch nutzbaren Bereich 16 geführt werden, dort ohne Isolierung weiter in der Rohrleitung verlaufen, so daß sich eine Erwärmung einstellt und anschließend in einem wiederum isolierten Bereich zur Abzugstelle 26 geleitet werden, wo das erwärmte Wärmeübertragungsmedium oder der Dampf in der Anlage 22 zur Energienutzung verwertet wird.

Fig. 3 zeigt ein derartiges Beispiel einer nicht isolierten Rohrleitung innerhalb des geothermisch nutzbaren Bereichs 16.

Eine andere mögliche Variante in einem Durchgangsloch 14 besteht darin, daß anstelle der einfachen, in Fig. 3 dargestellten Rohrleitung ein Rohrbündeiwärmetauscher in die Bohrung 14 eingezogen wird. Hierbei wird das Rohrbündel in einem Mantelrohr angeordnet, das nach dem Installieren der aus dem Mantelrohr und dem darin angeordneten Rohrbündel wieder aus der Bohrung herausgezogen wird, so daß eine direkte Erwärmung der einzelnen Rohre des Rohrbündels möglich ist. Alternativ kann das Rohrbündel nur im thermisch nutzbaren Bereich und die Zuleitung und Abfuhrleitung als einfache Rohrleitungen ausgebildet sein.

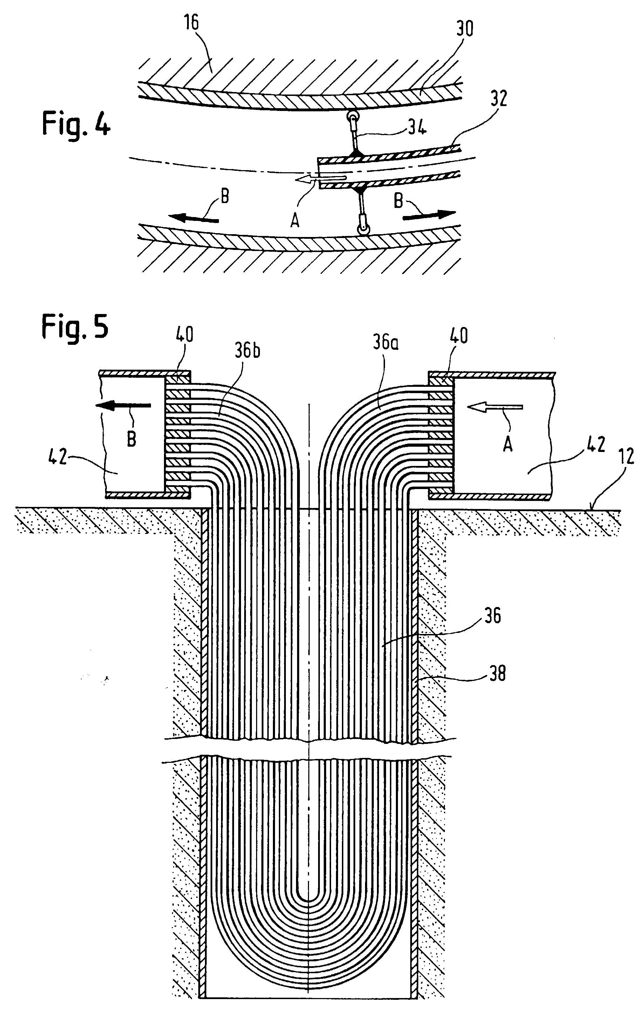

Eine wieder andere Variante ist in der Fig. 4 dargestellt und zeigt den Übergangsbereich zwischen einem Wärmetauscherrohr 30, das als Doppelrohr mit zwei konzentrisch angeordneten Strömungsräumen ausgebildet ist und einem Wärmetauscherrohr mit nur einem einzigen Strömungsraum. In dem innenliegenden Rohr 32 wird in Pfeilrichtung A flüssiges Wärmeübertragungsmedium, z.B. Wasser, in den geothermisch nutzbaren Bereich 16 eingebracht, in dem sich das Wasser erhitzt, siedet und als Dampf in beide Richtungen in Pfeilrichtung B abströmen kann. Das innere Zuleitungsrohr 32 wird mit Hilfe von Abstandshaltern 34 konzentrisch im Wärmetauscherrohr 30 gehalten. Die in Fig. 4 dargestellte Verfahrensvariante ermöglicht es, mit einem erstellten Durchgangsloch gemäß der Fig. 2 zwei Anlagen zur Energienutzung 20 und 22 gleichzeitig und voneinander entfernt betreiben zu können, da zu beiden Anlagen der erzeugte Dampf geleitet wird. Wie in Fig. 4 ersichtlich ist, ist der Strömungsquerschnitt des Wärmetauscherrohrs 32 im Vergleich zu dem umgebenden Ringraum deutlich kleiner zu bemessen, um der Volumenexpansion beim Sieden des Wassers Rechnung zu tragen.

Sämtliche im Zusammenhang mit dem Durchgangsloch bzw. der Schlaufenbohrung gemäß Fig. 2 dargestellten Ausführungsvarianten für das Wärmetauscherrohr lassen sich bequem beim Zurückziehen des Bohrgestänges von der Zielöffnung 26 zur Startöffnung 24 in die Bohrung einziehen.

Bei den im Zusammenhang mit Fig. 1 diskutierten Verfahrensalternativen unter Verwendung einer Sackbohrung wird das Wärmetauscherrohr eingebracht, indem ein Abrollbohrgestänge als Umhüllung das Wärmetauscherrohr in die Bohrung nimmt und das als Tubing wirkende Abrollbohrgestänge anschließend aus der Bohrung um das Wärmetauscherrohr herum zurückgezogen wird. Auf diese Weise lassen sich auch in einer Sackbohrung komplexe Geometrien für das Wärmetauscherrohr einbringen.

Eine mögliche Ausführungsform für das Wärmetauscherrohr in einer Sackbohrung ist in der Fig. 5 dargestellt. Das Wärmetauscherrohr besteht aus einer Rohrbündelschlange bestehend aus einzelnen Rohren, die aufgrund des geschlossenen Strömungskreislaufes und der Möglichkeit, ein reines Wärmeübertragungsmedium, z .B. demineralisiertes Wasser, zu verwenden, eine relativ geringe Größe der einzelnen Rohrleitungen besitzen kann. So sind beispielsweise Rohrbündel bestehend aus Einzelrohren von etwa 8 mm Durchmesser denkbar. Das Rohrbündel 36 befindet sich beim Einbringen in das Sackbohrloch in einem Mantelrohr 38, das nach dem Einbau zurückgezogen wird. Oberhalb der Erdoberfläche teilt sich das schlaufenförmig innerhalb der Bohrung verlegte Rohrbündel in ein Bündel 36a von Zulaufrohren sowie ein Bündel 36b von Ablaufrohren, die jeweils an einem Rohrboden 40 in ein entsprechendes Zulauf- bzw. Ablaufrohr 42 übergehen. Die Zulauf bzw. Ablaufrichtung ist durch die Pfeile A und B angedeutet.

Das Einführen eines Rohrbündels in das Bohrloch ist insbesondere für geothermische Niedertemperaturwärme geeignet.

Da ein Rohrbündel 36 im Vergleich zu isolierten Rohrleitungen mit nur zwei Kammern teurer ist, ist selbstverständlich auch eine Variante denkbar, bei der die Rohrböden innerhalb der Bohrung im Übergangsbereich zwischen dem thermisch nutzbaren Bereich und dem thermisch nicht nutzbaren Bereich angeordnet ist. Diese in den Figuren nicht dargestellte Ausführungsform besitzt den Vorteil, daß das Rohrbündel nur in dem thermisch nutzbaren Bereich verwirklicht ist, wodurch in diesem Bereich die für den Wärmeübergang wesentliche Wärmeaustauschfläche vergrößert ist, während in dem sonstigen Bereich, der von dem erwärmten Strom mit möglichst geringen Wärmeverlusten durchströmt werden soll, nur eine einzelne Kammer vorgesehen ist, die aufgrund des günstigeren Verhältnisses zwischen Volumen und Oberfläche einem geringeren Wärmeverlust unterworfen ist. Selbstverständlich können, wie in der Technik bekannt ist, die Rohrbündel mit geeigneten Umlenkzonen so gestaltet werden, daß im geothermisch nutzbaren Bereich mehrere Durchgänge und somit eine erhöhte Verweildauer realisiert wird.

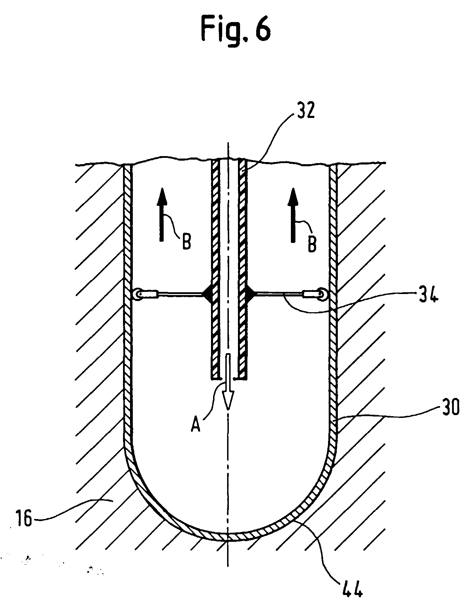

Fig. 6 zeigt eine weitere Variante eines Wärmetauscherrohres, das ähnlich dem in Fig. 4 dargestellten Wärmetauscherrohr aus zwei konzentrischen Leitungen besteht, die mit Abstandshaltern 34 koaxial zueinander angeordnet sind. Im Gegensatz zu der in Fig. 4 dargestellten Ausführungsform ist der Rohrboden 44 geschlossen, da es sich bei dem in Fig. 6 dargestellten Ausführungsbeispiel um ein Wärmetauscherrohr für eine Sackbohrung handelt. Durch die innere, vorzugsweise wärmeisoliert ausgeführte, Rohrleitung 32 wird Wasser in Pfeilrichtung A nach unten in die Bohrung gefördert und strömt in Richtung des Rohrbodens 44 aus. Das Wasser wird in diesem Bereich zum Sieden gebracht und strömt in Pfeilrichtung B als Dampf nach oben in dem äußeren Ringraum ab.

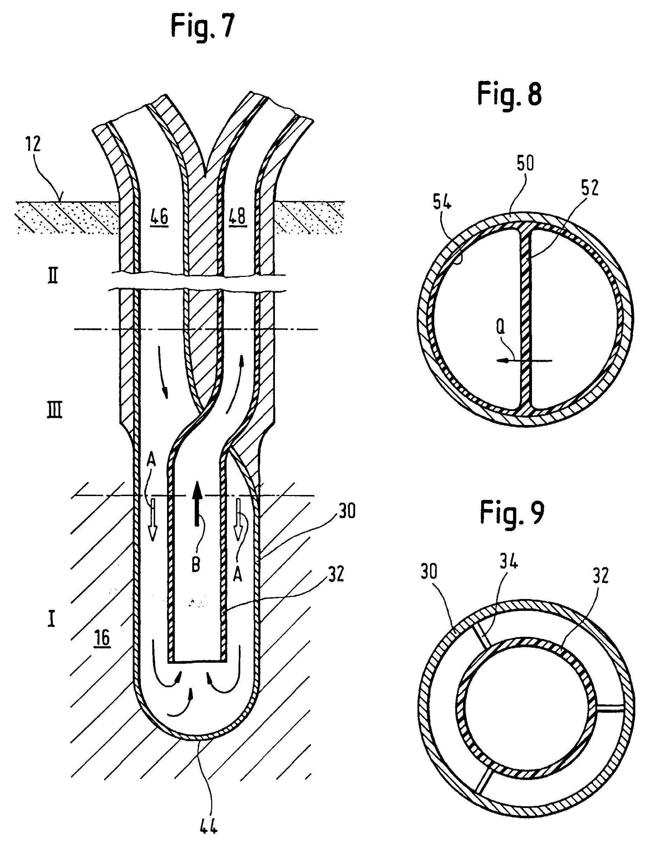

Fig. 7 zeigt eine besonders bevorzugte Ausführungsform eines Wärmetauscherrohrs zur Verwendung in einem Sackloch. Das Wärmetauscherrohr läßt sich im wesentlichen in drei Bereiche unterteilen, einem Bereich I im geothermisch nutzbaren Umfeld 16, einem Bereich II, der in Fig. 7 stark verkürzt dargestellt ist und im Bereich der Zu- und Abfuhr des wärmeübertragungsmediums liegt sowie einen Bereich III, der den Übergang zwischen den beiden Bereichen I und II darstellt.

Im Bereich I ist eine konzentrische Anordnung der Rohre verwirklicht, wobei ein isoliertes Innenrohr 32 durch Abstandshalter 34 (siehe Fig. 9) konzentrisch in dem nicht isolierten Außenrohr 30 gehalten wird. In dem ringförmigen Querschnitt zwischen dem Innenrohr 32 und Außenrohr 20 strömt das zu erwärmende Wärmeübertragungsmedium in Pfeilrichtung A von außen nach innen und wird durch Wärmetausch mit dem geothermisch nutzbaren Bereich 16 erhitzt. Anschließend strömt das Wärmeübertragungsmedium in Pfeilrichtung B im isolierten, kreisringförmigen Innenrohr 32 nach oben und in das speziell ausgebildete Übergangsstück im Bereich III, das die beiden konzentrisch zueinander angeordneten Kammern voneinander trennt, so daß die Zufuhrleitung 46 sowie Abfuhrleitung 48 gut isoliert voneinander getrennt sind. Hierzu ist im Bereich II die Rohrleitung 50 mit einer isolierenden Trennwand 52 in zwei Kammern unterteilt, wie aus Fig. 8 ersichtlich ist. Zusätzlich ist in der Rohrleitung 50 eine Isolierung 54 eingeschoben, um insbesondere den Wärmeverlust des Wärmeübertragungsmediums in der Abfuhrleitung 48 möglichst gering zu halten.

Die in Fig. 8 dargestellte Querschnittsgeometrie bietet sich an, da die beiden Strömungsräume im Vergleich zu ihrem Volumen nur eine geringe Kontaktfläche zueinander aufweisen, durch die der Verlustwärmestrom Q hindurchtreten kann. Da der Verlustwärmestrom Q neben den durch die Isolierung vorgegebenen Wärmedurchgangskoeffizient und der Temperaturdifferenz zwischen dem Wärmeübertragungsmedium in den Leitungen 46 und 48 auch durch die Fläche zwischen den beiden Kammern vorgegeben ist, sind diejenigen Geometrien vorteilhaft, welche eine möglichst geringe Kontaktfläche zwischen den Kammern vorsehen.

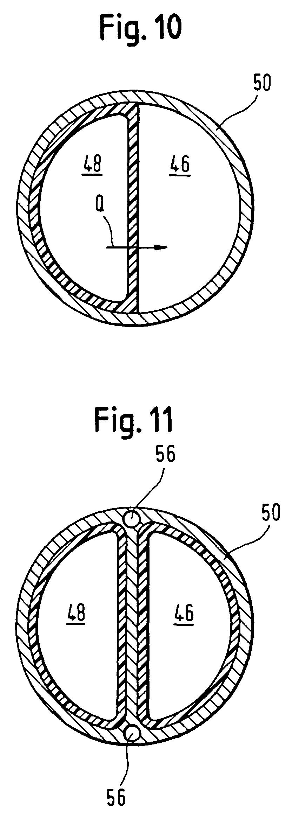

Bei dem Wärmeübertragungsmedium in der Zufuhrleitung 46 handelt es sich im Regelfall um kaltes Wasser, das bei seinem Transport in den geothermisch nutzbaren Bereich bereits Bodenbereiche mit einer geringfügig erhöhten Temperatur durchläuft. In diesen Bereichen kann das kalte Wasser bereits einer Vorerwärmung unterworfen sein, wodurch zum einen die zum Erzeugen von Heißwasser oder Dampf benötigte Wärmemenge im geothermisch nutzbaren Bereich geringer ist und zum anderen auch der Wärmeverluststrom Q zwischen der Abfuhrleitung 48 und der Zufuhrleitung 46 aufgrund der Verringerung des treibenden Temperaturgefälles vermindert werden kann. Bei der in Fig. 10 dargestellten Ausführungsform wird daher in die Rohrleitung 50 nur ein Einsatz aus Isoliermaterial, z.B. GFK, eingebracht, der halbkreisförmig gebildet ist und lediglich die Abfuhrleitung 48 wärmeisolierend umschließt.

In der Darstellung in Fig. 10 ist der Strömungsquerschnitt der Abfuhrleitung 48 etwas geringer als der Strömungsquerschnitt der Zufuhrleitung, wodurch sich in der Abfuhrleitung eine etwas höhere Strömungsgeschwindigkeit als in der Zufuhrleitung einstellt. Auch diesen physikalischen Effekt kann man sich gezielt zunutze machen, um die Verweildauer des erhitzten Wärmeübertragungsmediums in der Abfuhrleitung zu verringern. Allerdings wird durch eine höhere Strömungsgeschwindigkeit möglicherweise auch der Verlustwärmestrom Q durch die optimierte konvektive Wärmeübertragung an die Trennwand erhöht und zudem durch den mit dem Quadrat der Strömungsgeschwindigkeit ansteigenden Druckverlust die Pumpenleistung erhöht, so daß bei der gezielten Verringerung des Strömungsquerschnitts der Abfuhrleitung der erzielbare Nutzen gegen den erhöhten Aufwand abgewogen werden muß.

Fig. 11 zeigt schließlich eine weitere Ausführungsform einer Rohrleitung 50, die vier Strömungskammern aufweist, nämlich die Zufuhrleitung 46, Abfuhrleitung 48 sowie zwei Injektionsleitungen 56. Selbstverständlich kann auch nur eine oder können auch mehrere Injektionsleitungen 56 vorgesehen sein. Die Zufuhrleitung sowie Abfuhrleitung sind jeweils mit einer wärmeisolierenden Auskleidung versehen, wobei selbstverständlich auch entsprechend dem in Fig. 10 diskutierten Ausführungsbeispiel eine wärmeisolierende Auskleidung nur in der Abfuhrleitung 48 vorgesehen sein kann. Die Injektionsleitungen 56 verlaufen innerhalb der Rohrleitung 50 bis zum Ende der Rohrleitung, an dem diese in den in Fig. 7 dargestellten Bereich III mündet, d.h. das Übergangsstück zwischen dem zweiten Bereich und ersten Bereich. Dort besitzen die jeweiligen Injektionsleitungen 56 eine oder mehrere Austrittsöffnungen zur Außenseite der Rohrleitung 50 hin, wodurch durch das Einspeisen eines geeigneten Injektionsmittels in die Injektionsleitungen 56 das Injektionsmittel entlang der Außenwand der Rohrleitung in den Grenzbereich zwischen dem geothermisch nutzbaren Bereich 16 und dem äußeren Wärmetauscherrohr einströmen kann.

Das Umgeben des Wärmetauscherrohrs 30 im geothermisch nutzbaren Bereich mit einem geeigneten hochsiedenden Injektionsmittel verbessert den Wärmetransport zwischen dem Gestein und dem Wärmetauscherrohr.

Da das Injektionsmittel mit der Zeit, insbesondere bei einem porösen Gestein, in dem umgebenden Bereich eindringt und somit für den Wärmeübergang nicht mehr zur Verfügung steht, kann mit Hilfe der Injektionsleitungen 56 durch das gezielte Einbringen eines Injektionsmittels das äußere Wärmetauscherrohr 30 bei Bedarf wieder mit einem hochsiedenden Injektionsmittel umgeben werden.

Die obigen Ausführungsformen dienten jeweils nur dazu, die verschiedenen Lösungsalternativen zu skizzieren, die jeweils unter Verwendung einer vollkommen verlaufsgesteuerten Bohrung innerhalb des geothermisch nutzbaren Bereiches die Gewinnung von Erdwärme verbessern helfen. Den jeweiligen Ausführungsformen liegt jeweils das Grundprinzip zugrunde, daß eine möglichst große Bohrlänge innerhalb des geothermisch nutzbaren Bereiches geführt wird, um auch bei hohen Strömungsgeschwindigkeiten des Wärmeübertragungsmediums innerhalb eines geschlossenen Kreislaufes eine ausreichende Wärmeaufnahme sicherzustellen. Darüber hinaus soll im geothermisch nutzbaren Bereich die Wärmeübertragungsfläche zum umgebenden Boden möglichst groß gehalten werden, um einen hohen Wärmestrom zu erzielen, während in dem sonstigen Bereich verschiedene Lösungsalternativen diskutiert werden, um den Verlustwärmestrom zwischen dem zugeführten Wärmeübertragungsmedium und dem abgeführten Wärmeübertragungsmedium gering zu halten.

## Patentansprüche

1. Verfahren zur Erschließung geothermischer Energie umfassend die Schritte:
- Vorantreiben einer vollkommen verlaufsgesteuerten Bohrung;
- Erfassen der Temperatur im umgebenden Bodenbereich;
- Steuerung des Bohrverlaufs in Abhängigkeit von der Temperatur im Boden; und
- in Abhängigkeit vom Wärmestrom Einbringen eines Wärmetauscherrohres in die Bohrung.

2. Verfahren nach Anspruch 1, weiter umfassend den Schritt des Injizierens eines Wärmeübertragungsmediums in einen das Wärmetauscherrohr umgebenden Bodenbereich.

3. Verfahren nach einem der Ansprüche 1 oder 2, weiter umfassend den Schritt:
- Erstellen von primären Abzweigbohrungen im geothermisch nutzbaren Bereich.

4. Verfahren nach Anspruch 3, weiter umfassend den Schritt:
- Erstellen von sekundären Abzweigbohrungen aus den primären Abzweigbohrungen heraus.

5. Verfahren nach Anspruch 3 oder Anspruch 4,
weiter umfassend den Schritt:
- Erstellen von bogenförmigen Durchgangsbohrungen, die wieder in die abzweigende Bohrung einmünden.

6. Verfahren nach einem der Ansprüche 1 bis 5,
dadurch **gekennzeichnet,** daß
die Teufe der Bohrung sich vorzugsweise am vorliegenden Wärmepotential orientiert und dieses durchfährt.

7. Verfahren nach einem der Ansprüche 1 bis 6,
dadurch **gekennzeichnet,** daß
das Wärmetauscherrohr in einem Abrollbohrgestänge in die Bohrung eingebracht wird.

8. Verfahren nach einem der Ansprüche 1 bis 7,
dadurch **gekennzeichnet,** daß
die Bohrung als Schlaufenbohrung mit unterschiedlichem Start- und Zielpunkt auf der Erdoberfläche ausgeführt wird.

9. Verfahren nach einem der Ansprüche 1 bis 8,
dadurch **gekennzeichnet,** daß
die Bohrung als Sackbohrung ausgeführt wird.

10. Verfahren nach Anspruch 8,
dadurch **gekennzeichnet,** daß
das Wärmetauscherrohr beim Zurückziehen des Bohrgestänges in die Bohrung eingezogen wird.

11. Vorrichtung für die Nutzung geothermischer Energie in Sackbohrungen und/oder Schlaufenbohrungen umfassend einen Wärmetauscherbereich, der sich in einem Wärmeherd befindet und ausgehend von einer Zuführbohrung jeweils in Richtung der höchsten Umgebungstemperatur verläuft.

12. Vorrichtung nach Anspruch 11 für die Nutzung geothermischer Energie in Sackbohrungen, umfassend:
- eine geschlossene Kreislaufführung von Wärmeübertragungsmedium mit einer ersten Kammer (46) im Wärmetauscherrohr für die Zuleitung von kaltem Wärmeübertragungsmedium und einer zweiten Kammer (48) im Wärmetauscherrohr für die Abfuhr von erwärmtem Wärmeübertragungsmedium;
dadurch **gekennzeichnet,** daß
- im geothermisch nutzbaren ersten Bereich (16) die erste Kammer konzentrisch um die zweite Kammer angeordnet ist; und
- im zweiten Bereich über dem sonstigen Verlauf der Bohrung die erste Kammer (46) und die zweite Kammer (48) durch eine wärmeisolierende Trennwand (52) getrennt sind, die in etwa entlang des Durchmessers des Wärmetauscherrohres (50) im Querschnitt verläuft.

13. Vorrichtung für die Nutzung geothermischer Energie in Sackbohrungen nach Anspruch 12, weiter umfassend ein Zwischenstück zwischen dem ersten Bereich und dem zweiten Bereich, das durch die jeweiligen ersten Kammern (46) und zweiten Kammern (48) den ersten Bereich und zweiten Bereich miteinander verbindet.

14. Vorrichtung nach Anspruch 11 für die Nutzung geothermischer Energie in Schlaufenbohrungen, umfassend:
- ein Bündel von Rohren, die von Wärmeübertragungsmedium durchströmbar sind.

15. Vorrichtung nach Anspruch 13 oder Anspruch 14, weiter umfassend:
- mindestens eine Injektionsleitung (56) innerhalb des Wärmetauscherrohres (50), die eine oder mehrere Öffnungen nach außen aufweist, um einen Stoff in den das Wärmetauscherrohr umgebenden Bodenbereich abzugeben.

16. Vorrichtung nach Anspruch 11 für die Nutzung geothermischer Energie in Schlaufenbohrungen, umfassend:
- ein Zuführrohr, das in den Wärmeherd hineinreicht;
- eine unverrohrte Bohrung im Wärmeherd, die sich an das Zuführrohr anschließt; und
- ein isoliertes Vorlaufrohr, das sich an das zum Zuführrohr entgegengesetzte Ende der unverrohrten Bohrung anschließt und zu der Erdoberfläche führt.

17. Erdwärmesonde zur Durchführung des Verfahrens nach einem der Ansprüche 1 bis 10 mit einer Einrichtung zur kontinuierlichen Erfassung von Temperaturverläufen in bestimmten Abschnitten oder im gesamten Verlauf einer Erdwärmesonde, umfassend ein Glasfasermeßkabel mit Schutzumhüllung.

18. Erdwärmesonde nach Anspruch 17, weiter umfassend eine Einrichtung zur Wartung, zur Freispülung und zur Erzwingung von Konvention an und um eine Erdwärmesonde mit einem vollständig oder abschnittsweise perforierten Rohr, das neben der Erdwärmesonde angeordnet ist.
